# EUROPEAN PATENT SPECIFICATION

(11) **EP 4 160 262 B1**
(45) Date of publication and mention of the grant of the patent: **26.08.2026**
(21) Application number: 22198263.0
(22) Date of filing: 28.09.2022
(51) Int. Cl.: G01S 17/931, G01S 7/481

(54) **LIDAR COMPRISING TWO LASER EMISSION MODULES**
LIDAR MIT ZWEI LASEREMISSIONSMODULEN
LIDAR COMPRENANT DEUX MODULES D'ÉMISSION LASER

(30) Priority: 30.09.2021 CN 202111159444; 30.09.2021 CN 202111158165
(43) Date of publication of application: 05.04.2023
(60) Divisional application: 26192889.9
(73) Proprietor: Suteng Innovation Technology Co., Ltd, Shenzhen City Guangdong 518000 (CN)
(72) Inventor: LI, Hongju, Shenzhen City, 518000 (CN); HUANG, Yizhi, Shenzhen City, 518000 (CN)
(74) Representative: Ran, Handong

(56) References cited:
- US-A1- 2019 293 765
- US-A1- 2021 003 706

## Description

### TECHNICAL FIELD

This application relates to the technical field of laser detection, and in particular, to a LiDAR.

### BACKGROUND

LiDAR is a radar system that emits a laser beam to detect characteristics such as position, speed, or the like of a target. A working principle of the LiDAR is to emit a detection signal (laser beam) to the target, then compare a received signal reflected from the target (target echo beam) with the emitted signal, and properly process the signal to obtain related information of the target, such as distance, azimuth, height, speed, attitude, and even shape of the target. However, in a related art, because a structure design of the LiDAR is improper, a problem that a detection field of view is limited is caused.
US20210003706A1 discloses a method of acquiring distance information of an object by using a LiDAR apparatus, which includes: irradiating a first laser light of a first type toward surroundings of the LiDAR apparatus for a first time period; receiving a first reflected laser light of the first laser light reflected from a first object located around the LiDAR apparatus, by using an optical sensor of the LiDAR apparatus; irradiating a second laser light of a second type, which is different from the first type, toward the surroundings of the LiDAR apparatus for a second time period following the first time period; receiving a second reflected laser light of the second laser light reflected from a second object located around the LiDAR apparatus.
US20190293765A1 discloses a multi-channel lidar sensor module capable of measuring at least two target objects using one image sensor. The multi-channel lidar sensor module includes at least one pair of light emitting units configured to emit laser beams and a light receiving unit formed between the at least one pair of emitting units and configured to receive at least one pair of reflected laser beams which are emitted from the at least one pair of light emitting units and reflected by target objects.

### SUMMARY

The invention is set out in the appended set of claims. This application provides a LiDAR, to solve a problem that a detection field of view of LiDAR in a related art is limited.

This application provides a LiDAR device as defined in claim 1. Compared with matching between the emission field of view of one laser emission module and the receiving field of view of one laser receiving module in the related art, it is more flexible to dispose two laser emission modules, which can implement a miniaturized design for the LiDAR device; and disposing two laser emission modules can also improve a receiving rate in the field of view of the laser receiving module and expand the detection angle of view of the LiDAR device.

### BRIEF DESCRIPTION OF THE DRAWINGS

To explain embodiments of the present application or the technical solutions in the prior art more clearly, the following briefly introduces the drawings that need to be used in the embodiments or the prior art. Obviously, the drawings in the following description are only some embodiments of the present application.
FIG. 1 is a three-dimensional diagram of a laser emission module and a laser receiving module in first LiDAR according to an embodiment of this application;
FIG. 2 is a three-dimensional diagram of a laser emission module and a laser receiving module in second LiDAR according to an embodiment of this application;
FIG. 3 is a cross-sectional view of the laser emission module and the laser receiving module in the LiDAR shown in FIG. 1;
FIG. 4 is a cross-sectional view of the laser emission module and the laser receiving module in the LiDAR shown in FIG. 2;
FIG. 5 is a cross-sectional view of an alternate solution of the laser emission module and the laser receiving module in the LiDAR shown in FIG. 4;
FIG. 6 is a three-dimensional diagram of third LiDAR according to an embodiment of this application;
FIG. 7 is a cross-sectional view of the LiDAR shown in FIG. 6 along an A-A direction;
FIG. 8 is an exploded view of the LiDAR shown in FIG. 6;
FIG. 9 is a three-dimensional diagram of fourth LiDAR according to an embodiment of this application;
FIG. 10 is a cross-sectional view of the LiDAR shown in FIG. 9 along an A-A direction;
FIG. 11 is a three-dimensional diagram of fifth LiDAR according to an embodiment of this application;
FIG. 12 is a cross-sectional view of the LiDAR shown in FIG. 11 along an A-A direction;
FIG. 13 is a cross-sectional view of the LiDAR shown in FIG. 11 along a B-B direction;
FIG. 14 is a three-dimensional diagram of sixth LiDAR according to an embodiment of this application;
FIG. 15 is a cross-sectional view of the LiDAR shown in FIG. 14 along an A-A direction;
FIG. 16 is a cross-sectional view of the LiDAR shown in FIG. 14 along a B-B direction;
FIG. 17 is a three-dimensional diagram of a laser emission module and a laser receiving module in seventh LiDAR according to an embodiment of this application;
FIG. 18 is an exploded view of the laser emission module and the laser receiving module in the LiDAR shown in FIG. 17;
FIG. 19 is a three-dimensional diagram of eighth LiDAR according to an embodiment of this application;
FIG. 20 is a cross-sectional view of the LiDAR shown in FIG. 19 along an A-A direction;
FIG. 21 is a cross-sectional view of an alternate solution of the LiDAR shown in FIG. 20 along an A-A direction; and
FIG. 22 is a cross-sectional view of another alternate solution of the LiDAR shown in FIG. 20 along an A-A direction.

### DESCRIPTION OF THE INVENTION

To make objectives, technical solutions and advantages of the present application clearer, embodiments of the present application are described in further detail below with reference to the drawings.

When the following description refers to the drawings, unless otherwise indicated, the same numbers in different drawings indicate the same or similar elements. The implementation described in the following exemplary embodiments do not represent all implementations consistent with the present application. On the contrary, the implementation is merely examples of devices and methods consistent with some aspects of the present application as detailed in the appended claims.

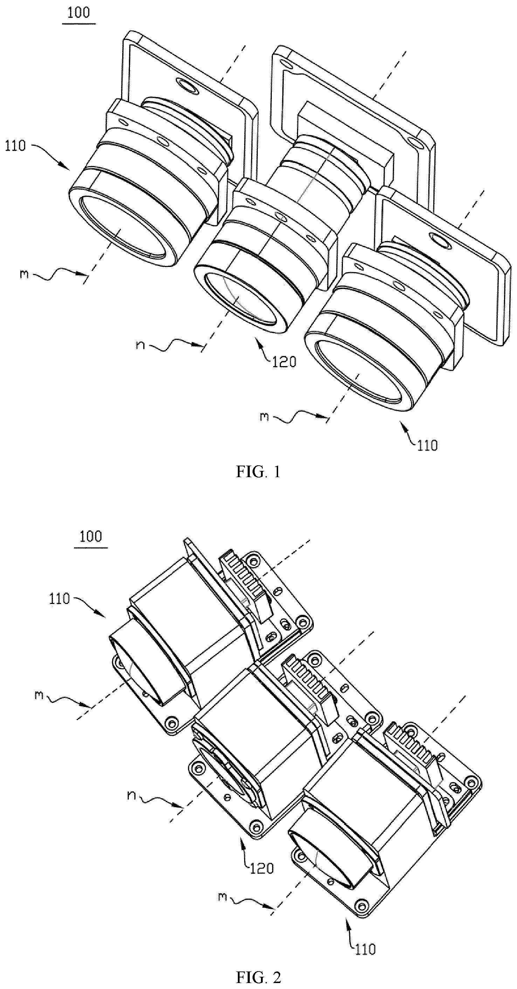

Referring to FIG. 1 and FIG. 2, an embodiment of this application provides a LiDAR 100. The LiDAR 100 may be solid-state LiDAR 100, which is used for functions such as navigation, obstacle avoidance, obstacle recognition, ranging, speed measurement, and automated driving of products such as an automobile, a robot, a transport vehicle, and a patrol vehicle.

Specifically, the LiDAR 100 may include two laser emission modules 110 and one laser receiving module 120. A combination of emission fields of view of the two laser emission modules 110 matches a receiving field of view of the laser receiving module 120. Compared with matching between the emission field of view of one laser emission module 110 and the receiving field of view of one laser receiving module 120 in the related art, in this solution, it may be more flexible to dispose the two laser emission modules 110, which can further implement a miniaturized design for the LiDAR 100; and disposing two laser emission modules 110 can also improve a receiving rate in the field of view of the laser receiving module 120 and expand the angle of view of the LiDAR 100.

It should be noted that the two laser emission modules 110 may be the same or different. When the two laser emission modules 110 are the same, in comparison with two different laser emission modules 110, because the two laser emission modules 110 have the same parameter, operations such as assembling and positioning are more convenient to perform. When the two laser emission modules 110 are different, various combinations of the two laser emission modules 110 may be implemented, which can satisfy more use scenarios.

In an example solution, the two laser emission modules 110 may be on opposite sides of the laser receiving module 120. In this way, the emission fields of view of the two laser emission modules 110 are roughly distributed on two sides of the laser receiving module 120, to facilitate receiving by the laser receiving module 120. In addition, the emission fields of view of the two laser emission modules 110 are roughly distributed on the two sides of the laser receiving module 120, and it is also convenient to adjust at least laser emission module 110, so that the emission fields of view of the two laser emission module 110 are overlapped in the middle, to ensure that the emission fields of view cover the entire receiving field of view of the laser receiving module 120, thereby avoiding a detection blind spot.

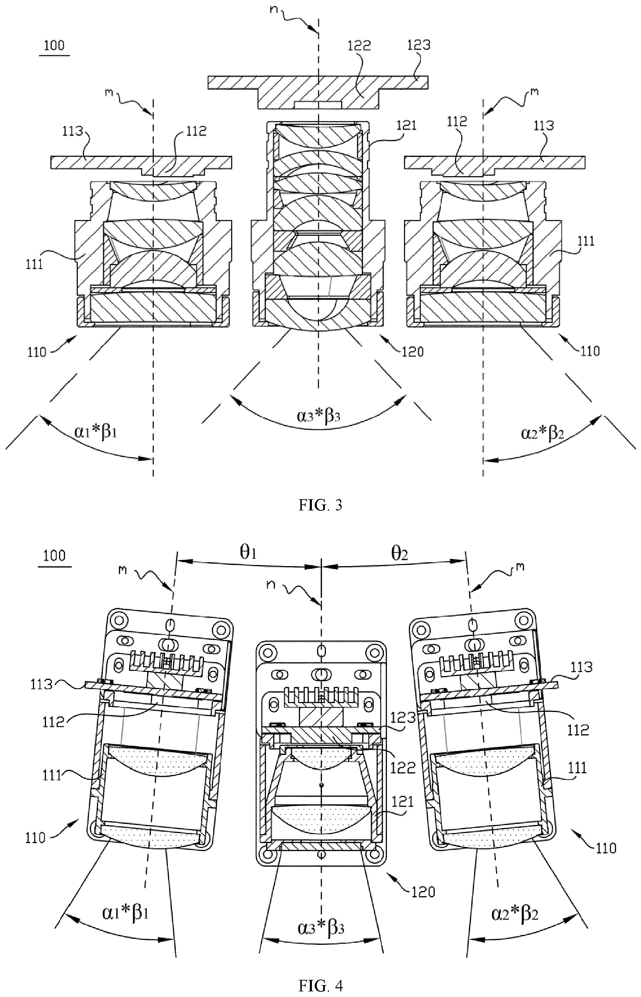

Referring to FIG. 3 to FIG. 5, each laser emission module 110 may include a laser emission lens 111 and a laser emission sensor 112. The laser emission sensor 112 can be configured to emit light, and the laser emission lens 111 can be located on a light-outgoing side of the laser emission sensor 112, to perform optical processing such as focusing on light emitted by the laser emission sensor 112, thereby enhancing light intensity in the emission field of view and improving detection accuracy of the LiDAR 100.

The laser emission lens 111 may have a first optical axis m. In some example solutions, referring to FIG. 3 and FIG. 4, laser emission sensors 112 of the two laser emission modules 110 may be on sides of their respective first optical axes m close to the laser receiving module 120. In this way, after being emitted by the laser emission lens 111, most light emitted by the laser emission sensor 112 is on the same side of the laser receiving module 120 as the laser emission module 110. For example, when the two laser emission modules 110 are on the left and right sides of the laser receiving module 120 respectively, a laser emission sensor 112 of the left laser emission module 110 can be disposed close to the right side of the optical axis m of the left laser emission module 110, and in this way, the emission field of view of the left laser emission module 110 is mainly distributed on the left side of the laser receiving module 120. Similarly, the laser emission sensor 112 of the right laser emission module 110 can be disposed close to the left side of the first optical axis m of the right laser emission module 110, and in this way, the emission field of view of the right laser emission module 110 is mainly distributed on the right side of the laser receiving module 120. Therefore, a combination of an emission field of view of the left laser emission module 110 and an emission field of view of the right laser emission module 110 can roughly match the receiving field of view of the laser receiving module 120, to avoid a waste of energy due to a large overlapped region between the emission field of view of the left laser emission module 110 and the emission field of view of the right laser emission module 110.

It should be noted that, even though the laser emission sensors 112 of the two laser emission modules 110 are on sides of their respective first optical axes m close to the laser receiving module 120, it is also necessary to ensure that there is an overlapped region between the emission fields of view of the two laser emission modules 110, to avoid a blind spot in the middle field of view.

During an assembly process of the LiDAR 100, the two laser emission sensors 112 can be pre-positioned first, so that their respective emission fields of view are on sides of corresponding first optical axes m away from the laser receiving module 120; and then, at least one laser emission sensor 112 is further fine-tuned, so that there is an overlapped region in the middle of the two emission fields of view.

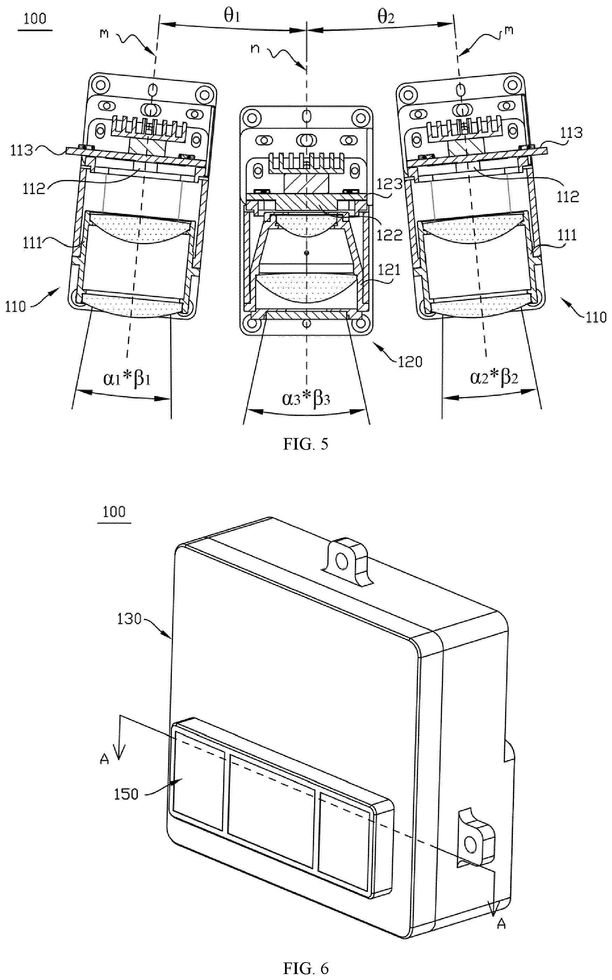

In another example solution, referring to FIG. 5, centers of the laser emission sensors 112 of the two laser emission modules 110 may also be at their respective first optical axes m. Therefore, the emission fields of view of the two laser emission modules 110 are basically symmetrically distributed on two sides of their respective first optical axes m. This facilitates assembling and positioning of the two laser emission modules 110 and the laser receiving module 120.

The first optical axes m of the two laser emission modules 110 and the second optical axis n of the laser receiving module 120 may be located in the same plane. Therefore, this facilitates calculation of a relative distance between the two laser emission modules 110 and the laser receiving module 120 during assembling, thereby reducing assembling difficulty; and this helps ensure that more light in the emission field of view can be received by the laser receiving module 120, thereby improving light utilization in the emission field of view.

Further, in some example solutions, referring to FIG. 3, both the first optical axes m of the two laser emission modules 110 may be parallel to the second optical axis n of the laser receiving module 120. Therefore, the LiDAR 100 can have a more neat and artistic structure and can be less difficult to assemble. Further, the first optical axes m of the two laser emission modules 110 may be symmetrically disposed relative to the second optical axis n of the laser receiving module 120. Therefore, when two identical laser emission modules 110 are selected, the emission fields of view of the two laser emission modules 110 can be symmetrically distributed on two sides of the laser receiving module 120, which can further reduce difficulty in calculating the relative distance during assembling, thereby facilitating assembly.

In some other example solutions, referring to FIG. 4 and FIG. 5, there may be an included angle between both the first optical axes m of the two laser emission modules 110 and the second optical axis n of the laser receiving module 120. Therefore, more various combinations of the laser emission modules 110 and the laser receiving module 120 can be implemented, thereby facilitating assembly. Preferably, an included angle between a first optical axis m of any laser emission module 110 and the second optical axis n of the laser receiving module 120 can be greater than 0° and less than 90°.

It should be noted that angles between the first optical axes m of the two laser emission modules 110 and the second optical axis n of the laser receiving module 120 may be equal or unequal. For example, an included angle between a first optical axis m of one laser emission module 110 and the second optical axis n of the laser receiving module 120 is θ₁, an included angle between a first optical axis m of the other laser emission module 110 and the second optical axis n of the laser receiving module 120 is θ₂, and θ₁ and θ₂ may be equal or unequal. Preferably, θ₁ and θ₂ are equal. That is, the first optical axes m of the two laser emission modules 110 are symmetrically disposed relative to the second optical axis n of the laser receiving module 120. Therefore, when two identical laser emission modules 110 are selected, the emission fields of view of the two laser emission modules 110 can be symmetrically distributed on two sides of the laser receiving module 120, which can further reduce difficulty in calculating the relative distance during assembling, thereby facilitating assembly.

In some other example solutions, in the two laser emission modules 110, there may be an included angle between one of the two first optical axes m and the second optical axis n of the laser receiving module 120, and the other first optical axis m may be parallel to the second optical axis n. Various arrangements may be implemented for the laser emission modules 110 and the laser receiving module 120 in the embodiments of this application, and the arrangement can be flexibly selected according to an actual use need, thereby ensuring broad application potential.

In the embodiments of this application, the emission field of view of the laser emission module 110 may be approximately in a shape of a quadrangular pyramid, and the receiving field of view of the laser receiving module 120 may be approximately in a shape of a quadrangular pyramid. The field of view in the shape of the quadrangular pyramid can be roughly divided into a horizontal field of view and a vertical field of view. Matching between the combination of the emission fields of view of the two laser emission modules 110 and the receiving field of view of the laser receiving module 120 can be as follows: A combination of horizontal emission fields of view of the two laser emission modules 110 matches a horizontal receiving field of view of the laser receiving module 120, and a combination of vertical emission fields of view of the two laser emission modules 110 matches a vertical receiving field of view of the laser receiving module 120.

Specifically, referring to FIG. 3 to FIG. 5, when one laser emission module 110 has a horizontal emission angle of view of α₁ and a vertical emission angle of view of β₁, the other laser emission module 110 has a horizontal emission angle of view of α₂ and a vertical emission angle of view of β₂, and the laser receiving module 120 has a horizontal receiving angle of view of α₃ and a vertical receiving angle of view of β₃, if the first optical axes m of the two laser emission modules 110 and the second optical axis n of the laser receiving module 120 are located in the same horizontal plane, matching between the combination of horizontal emission fields of view of the two laser emission modules 110 and the horizontal receiving field of view of the laser receiving module 120 can indicate that α₃ = α₁ + α₂; and matching between the combination of vertical emission fields of view of the two laser emission modules 110 and the vertical receiving field of view of the laser receiving module 120 can indicate that β₃ = β₂ = β₁. For example, in FIG. 3, α₁ and α₂ can be equal and both 59°, in this case, α₃ can be 118°, and β₁, β₂ and β₃ can all be 30°. For example, in FIG. 5, α₁ and α₂ can be equal and both 11°, in this case, α₃ can be 22°, and β₁, β₂ and β₃ can all be 7°.

It should be noted that when there are included angles between the first optical axes m of the two laser emission modules 110 shown in FIG. 5 and the second optical axis n of the laser receiving module 120, and the first optical axes m of the two laser emission modules 110 and the second optical axis n of the laser receiving module 120 are located in the same plane, if the first optical axis m of one laser emission module 110 and the second optical axis n of the laser receiving module 120 form an included angle of θ₁, the emission angle of view of the laser emission module 110 in the first plane may be 2θ₁. If the first optical axis m of the other laser emission module 110 and the second optical axis n of the laser receiving module 120 form an included angle of θ₂, the emission angle of view of the other laser emission module 110 in the first plane may be 2θ₂. In this case, the receiving angle of view of the laser receiving module 120 in the first plane is 2θ₁ + 2θ₂. In this way, in comparison with the solution in the related art in which one laser emission module corresponds to one laser receiving module, the receiving angle of view of the laser receiving module 120 is a sum of the emission angles of view of two laser emission modules 110, which can significantly increase a receiving rate in the field of view of the laser receiving sensor 122 of the laser receiving module 120, thereby increasing a detection angle of view of the LiDAR 100.

Preferably, θ₁ can be equal to θ₂, and in this case, the receiving angle of view of the laser receiving module 120 is 4*θ₁. That is, when there are included angles θ₁ between the first optical axes m of the two laser emission modules 110 and the second optical axis n of the laser receiving module 120, the horizontal receiving angle of view of α₃ of the laser receiving module 120 is twice a horizontal emission angle of view of any laser emission module 110, which can further increase the receiving rate in the field of view of the laser receiving module 120, thereby expanding the detection angle of view of the LiDAR 100.

Preferably, θ₁ = θ₂ = 5.5°, the emission angles of view of the two laser emission modules 110 may both be 11°, and therefore, the receiving angle of view of the laser receiving module 120 may be 22°. In this case, the LiDAR 100 can have both a wide angle of view and high detection accuracy.

In an example solution, the laser emission sensors 112 of the two laser emission modules 110 can emit light simultaneously. In this way, detection time of the LiDAR 100 can be shortened, and a detection speed thereof can be increased. In another example solution, the laser emission sensors 112 of the two laser emission modules 110 may emit light asynchronously. In this way, light emitted by the two laser emission modules 110 is less likely to interfere with each other, which can improve the detection accuracy of the LiDAR 100.

The laser emission sensors 112 of the two laser emission modules 110 may each include a plurality of light sources disposed in a matrix. For example, one laser emission sensor 112 may include R*T light sources, and the other laser emission sensor 112 may include P*Q light sources. During use, in one laser emission sensor 112, light sources in the same column can be turned on simultaneously to emit light, and T light sources in the same column can be turned on in sequence according to the preset timing. For example, a first column of light sources can be turned on in a 1^{st} second, a second column of light sources can be turned on in a 2^{nd} second, a third column of light sources can be turned on in a 3^{rd} second, ..., a T^{th} column of light sources can be turned on in a T^{th} second. Similarly, in another laser emission sensor 112, the light sources in the same column can also be turned on simultaneously, and Q light sources in the same column can be turned on in sequence according to the preset timing. For example, a first column of light sources can be turned on in a 1^{st} second, a second column of light sources can be turned on in a 2^{nd} second, a third column of light sources can be turned on in a 3^{rd} second, ..., a Q^{th} column of light sources can be turned on in a Q^{th} second.

The fact that the two laser emission sensors 112 simultaneously emit light may be: In the 1^{st} second, the first column of light sources of one laser emission sensor 112 are turned on and the first column of light sources of the other laser emission sensor 112 are turned on; in the 2^{nd} second, the second column of light sources of the laser emission sensor 112 are turned on and the second column of light sources of the other laser emission sensor 112 are turned on, and so on, until all light sources of the two laser emission sensors 112 are turned on.

The fact that the two laser emission sensors 112 emit light asynchronously may be: The two laser emission sensors 112 emit light in sequence according to preset timing. The fact that the two laser emission sensors 112 emit light in sequence according to preset timing may be: The multiple light sources of the two laser emission sensors 112 sequentially and alternately emit light according to the preset timing. The preset timing can be flexibly adjusted based on an actual situation. For example, in the 1^{st} second, the first column of light sources of one laser emission sensor 112 are turned on; in the 2^{nd} second, the first column of light sources of the other laser emission sensor 112 are turned on; in the 3^{rd} second, the second column of light sources of the laser emission sensor 112 are turned on, in the 4^{th} second, the second column of light sources of the other laser emission sensor 112 are turned on, and so on, until all light sources of the two laser emission sensors 112 are turned on.

In an example solution, an arrangement direction of the first column of light sources to the T^{th} column of light sources of one laser emission sensor 112 may be the same as or different from an arrangement direction of the first column of light sources to the Q^{th} column of light sources of the other laser emission sensor 112. For example, when the two laser emission sensors 112 are on the left and right sides of the laser emission modules 110 respectively, and an arrangement direction of the first column of light sources to the T^{th} column of light sources on the laser emission sensor 112 of the left laser emission module 110 is from left to right, an arrangement direction of the first column of light sources to the Q^{th} column of light sources on the laser emission sensor 112 of the right laser emission module 110 can be from left to right or from right to left. During use, the arrangement direction may be flexibly adjusted based on an actual use need. This is not limited in the embodiments of this application.

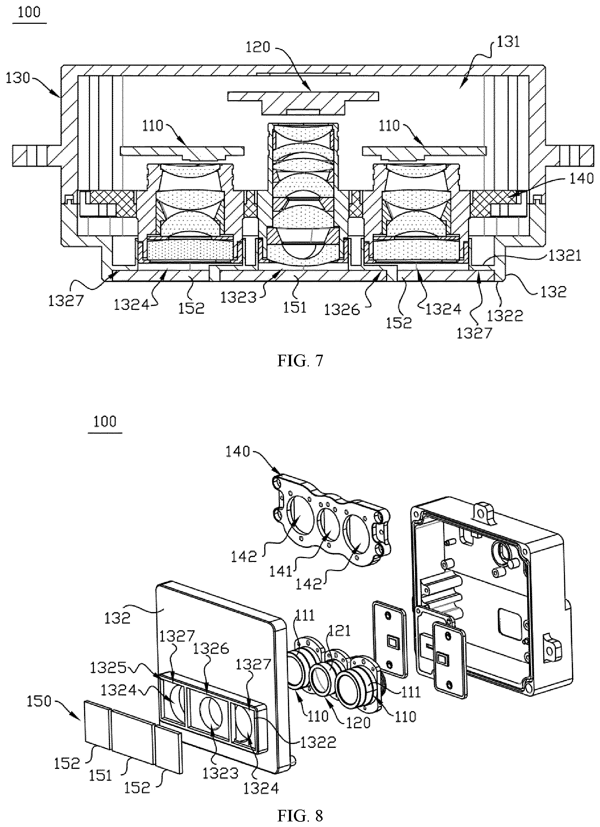

Referring to FIG. 6, the LiDAR 100 may further include a housing 130. Referring to FIG. 7, the housing 130 may be provided with an accommodating cavity 131, and at least part of the two laser emission modules 110 and at least part of the laser receiving module 120 may be located in the accommodating cavity 131. The housing 130 can protect the laser emission modules 110 and the laser receiving module 120 to some extent, thereby improving service life of the LiDAR 100.

To facilitate mounting and positioning of the two laser emission modules 110 and the laser receiving module 120 in the housing 130, referring to FIG. 7 and FIG. 8, the LiDAR 100 may further include a bracket 140 located in the accommodating cavity 131. Specifically, the bracket 140 can be mounted on an inner wall of the housing 130, the bracket 140 may be provided with a first mounting aperture 141 and second mounting apertures 142 respectively located on two sides of the first mounting aperture 141, the laser receiving module 120 may be mounted in the first mounting aperture 141, and each laser emission module 110 may be mounted in one second mounting aperture 142 respectively.

In an example solution, the laser emission lens 111 of the laser emission module 110 can be mounted on the bracket 140, and the laser receiving lens 121 of the laser receiving module 120 can be mounted on the bracket 140. In this way, the laser emission lens 111 and the laser receiving lens 121 can be mounted on the bracket 140 and then mounted in the housing 130 together with the bracket 140. Compared with a manner of assembling the laser emission lens 111 and the laser receiving lens 121 directly on the inner wall of the housing 130, the manner of assembling is more convenient. To facilitate assembly of the laser emission lens 111 and the laser receiving lens 121 with the bracket 140, a fixing plate may be mounted on the laser emission lens 111 and/or the laser receiving lens 121, so that the laser emission lens 111 and the laser receiving lens 121 can be connected to the bracket 140 by using the fixing plate.

The bracket 140 may be an integrated structure or may include three sub-brackets that are separately disposed corresponding to the two laser emission modules 110 and the laser receiving module 120. When the bracket 140 has the integrated structure, the bracket 140 is easy to mount in the housing 130. When the bracket 140 includes three sub-brackets, assembly of the two laser emission modules 110 with the sub-brackets and assembly of the laser receiving module 120 with the sub-bracket is independent of each other and is easy to implement.

When the two laser emission modules 110 and the laser receiving module 120 are completely located in the accommodating cavity 131, the housing 130 may include a first plate body 132. The first plate body 132 may have a first plate surface 1321 facing the accommodating cavity 131 and a second plate surface 1322 opposite the first plate surface 1321, and the first plate body 132 may be provided with a first light-passing aperture 1323, penetrating the first plate surface 1321 and the second plate surface 1322, and second light-passing apertures 1324 on two sides of the first light-passing aperture 1323 respectively. The laser receiving module 120 can be disposed corresponding to the first light-passing aperture 1323, so that the received light can pass through the first light-passing aperture 1323 to reach the laser receiving module 120. Each laser emission module 110 may be disposed corresponding to one second light-passing aperture 1324, so that emitted light can pass through the second light-passing aperture 1324 to reach a to-be-photographed object.

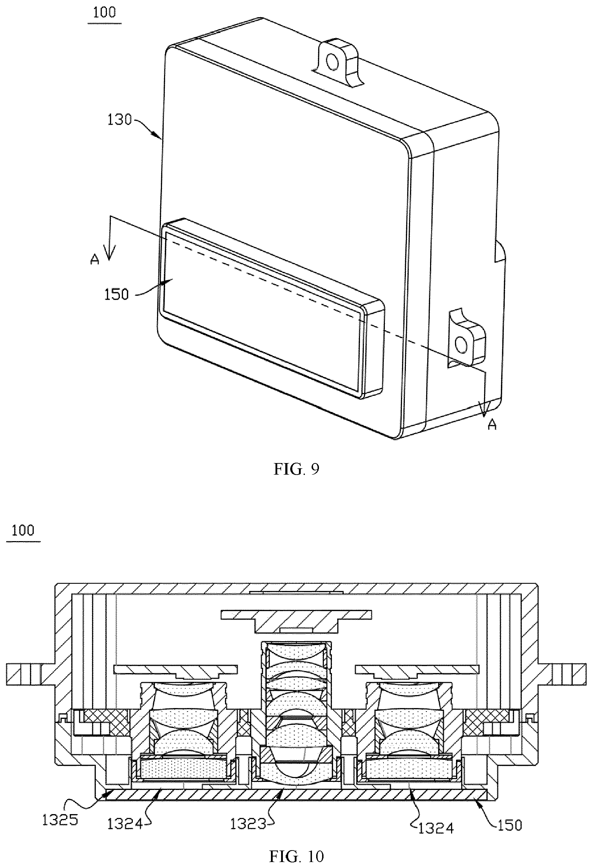

To prevent detection accuracy of the LiDAR 100 from being affected due to impurities such as dust entering the accommodating cavity 131 through the first light-passing aperture 1323 and the second light-passing aperture 1324, referring to FIG. 6, a light-passing protective plate 150 may be disposed at the first light-passing aperture 1323 and the two second light-passing apertures 1324. In an example solution, light-passing protective plates 150 at the first light-passing aperture 1323 and the two second light-passing apertures 1324 may be disposed separately. That is, one light-passing protective plate 150 is correspondingly disposed at each light-passing aperture, and in this way, the number of light-passing protective plates 150 can be reduced, which can reduce production costs and can reduce optical crosstalk between the laser emission module 110 and the laser receiving module 120. In another example solution, referring to FIG. 9 and FIG. 10, one light-passing protective plate 150 may be used at the first light-passing aperture 1323 and the two second light-passing apertures 1324. That is, one light-passing protective plate 150 is disposed corresponding to three light-passing apertures, thereby ensuring integrity and simplicity of the structure, reducing an assembling step and improving assembling efficiency.

To ensure surface flatness of the LiDAR 100, a mounting groove 1325 for mounting the light-passing protective plate 150 may be provided in the second plate surface 1322. In this way, the light-passing protective plate 150 can be prevented from protruding from the housing 130, and the LiDAR 100 can be more artistic.

Specifically, when the first light-passing aperture 1323 and the two second light-passing apertures 1324 are disposed corresponding to one light-passing protective plate 150, a mounting groove 1325 may be provided in the second plate surface 1322, and the mounting groove 1325 may be connected to all the first light-passing aperture 1323 and the two second light-passing apertures 1324.

Referring to FIG. 7 and FIG. 8 again, when the first light-passing aperture 1323 and the two second light-passing apertures 1324 are disposed corresponding to one light-passing protective plate 150 respectively, the light-passing protective plate 150 can be construed as including a first light-passing protective sub-plate 151 and two second light-passing protective sub-plates 152, a first mounting groove 1326 and second mounting grooves 1327 on two sides of the first mounting groove 1326 respectively can be provided in the second plate surface 1322. The first mounting groove 1326 can be connected to the first light-passing aperture 1323, and each second mounting groove 1327 can be connected to one second light-passing aperture 1324. In this case, the first light-passing protective sub-plate 151 may be located in the first mounting groove 1326, and each second light-passing protective sub-plate 152 may be located in one second mounting groove 1327 respectively.

In some example solutions, the light-passing protective plate 150 may also have a light filtering function. That is, a light filter may be selected as the light-passing protective plate 150 to filter out light on a non-working band.

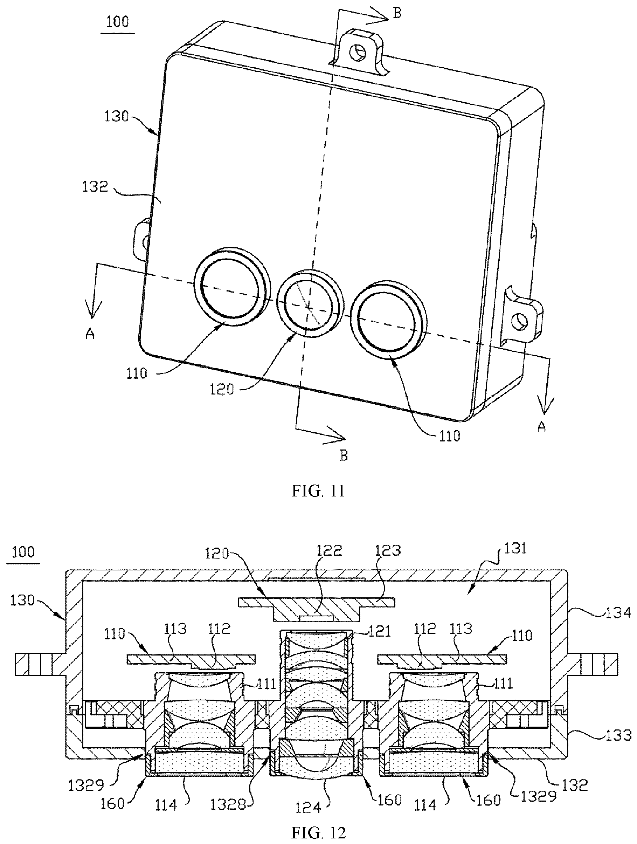

It should be noted that, in addition to a manner of disposing the two laser emission modules 110 and the laser receiving module 120 completely in the accommodating cavity 131, parts of the two laser emission modules 110 and the laser receiving module 120 can also be disposed in the accommodating cavity 131, and other parts are disposed outside the housing 130. Specifically, referring to FIG. 11 and FIG. 12, the housing 130 may include a first plate body 132. The first plate body 132 may be provided with a third mounting aperture 1328 and fourth mounting apertures 1329 on two sides of the third mounting aperture 1328 respectively. A receiving end 124 of the laser receiving module 120 can penetrate through the third mounting aperture 1328 and is outside the housing 130; and an emission end 114 of each laser emission module 110 can penetrate through one fourth mounting aperture 1329 and is outside the housing 130 respectively. In this way, it is easy to integrate the LiDAR 100 on another device, thereby reducing production costs and reducing optical attenuation.

In some example solutions, the housing 130 may include a first housing 133 and a second housing 134 disposed opposite the first housing 133. The first housing 133 and the second housing 134 may be connected to form the accommodating cavity 131. Specifically, the first housing 133 and the second housing 134 may be detachably connected, to facilitate mounting of components such as the laser emission modules 110 and the laser receiving module 120 in the accommodating cavity 131. For example, the first housing 133 and the second housing 134 can be detachably connected by using a screw or the like.

In some example solutions, a light shielding member 160 is sleeved at a periphery of at least one of emission ends 114 of the two laser emission modules 110 and the receiving end 124 of the laser receiving module 120. In this way, optical crosstalk between the laser emission modules 110 and the laser receiving module 120 can be avoided, and the detection accuracy of the LiDAR 100 can be improved.

It can be understood that the light shielding member 160 may be any device with a light shielding function, such as a light shielding coating and a light shielding plate. This is not limited in this embodiment of this application.

In addition to the laser emission lens 111 and the laser emission sensor 112, each laser emission module 110 may also include an emission board 113 electrically connected to the laser emission sensor 112. The emission board 113 can be configured to accommodate the laser emission sensor 112 and provide a power supply signal, a control signal, and the like for the laser emission sensor 112.

The laser receiving module 120 may include a laser receiving lens 121, a laser receiving sensor 122 on an imaging side of the laser receiving lens 121, and a receiving board 123 electrically connected to the laser receiving sensor 122. The laser receiving lens 121 can focus received light and emit focused light to the laser receiving sensor 122, so that more light can reach the laser receiving sensor 122, thereby improving the detection accuracy of the LiDAR 100. The receiving board 123 can be configured to accommodate the laser receiving sensor 122 and provide a power supply signal, a control signal, and the like for the laser receiving sensor 122.

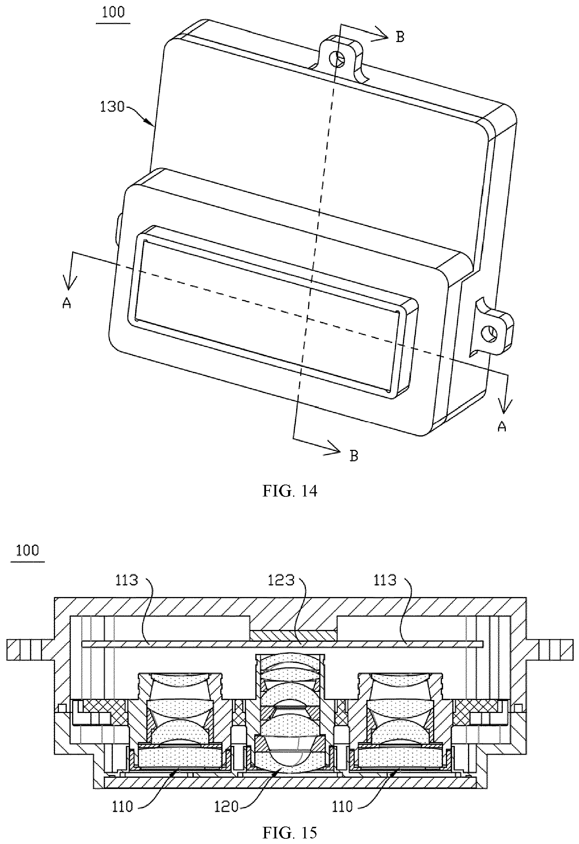

In some example solutions, the two emission boards 113 and the receiving board 123 may be independent circuit boards, to facilitate assembly of the laser emission module 110 and the laser receiving module 120. In some other example solutions, referring to FIG. 14 to FIG. 16, the two emission boards 113 and the receiving board 123 may also share the same circuit board, to reduce production costs and a volume of the LiDAR 100.

When the emission boards 113 and the receiving board 123 are independent of each other, during assembling, the laser receiving lens 121 and the receiving board 123 can be adjusted into a standard module first, and then assembled in the housing 130 together with the two laser emission lenses 111, and then, positions of the two emission boards 113 are adjusted, to complete a light adjustment process. When the emission boards 113 and the receiving board 123 share the same circuit board, during assembling, the two laser emission sensors 112 and the laser receiving sensor 122 can be installed on the circuit board first, and then the two laser emission lenses 111 and the laser receiving lens 121 can be adjusted, to complete a light adjustment process.

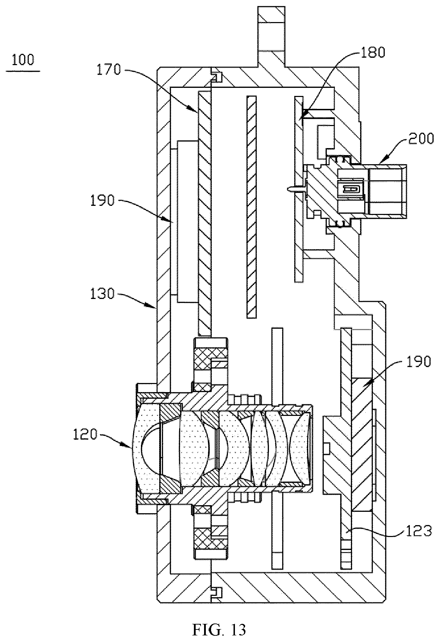

Referring to FIG. 12 and FIG. 13, the LiDAR 100 may further include a main control board 170. The two emission boards 113 and the receiving board 123 can be electrically connected to the main control board 170. The main control board 170 can be connected to an interface board 180, and can be electrically connected to an external connector 200 via the interface board 180 to supply power and/or perform communication. The main control board 170 and the interface board 180 can be connected by using a connector such as a flexible flat cable. The main control board 170 and the interface board 180 may be above the laser emission module 110 and the laser receiving module 120.

The housing 130 and at least one of the main control board 170, the emission board 113, and the receiving board 123 may be provided with a heat conduction member 190. Heat generated by the main control board 170, the emission board 113, and the receiving board 123 can be conducted to the housing 130 for dissipation via the heat conduction member 190, to implement heat dissipation for a high-power device, thereby improving heat dissipation performance of the LiDAR 100. The heat conduction member 190 may include a heat conduction silicone sheet, a heat dissipation fin, and the like.

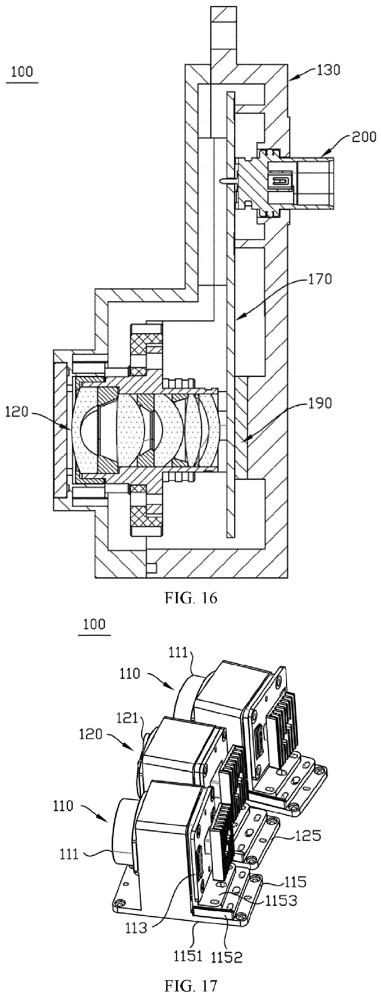

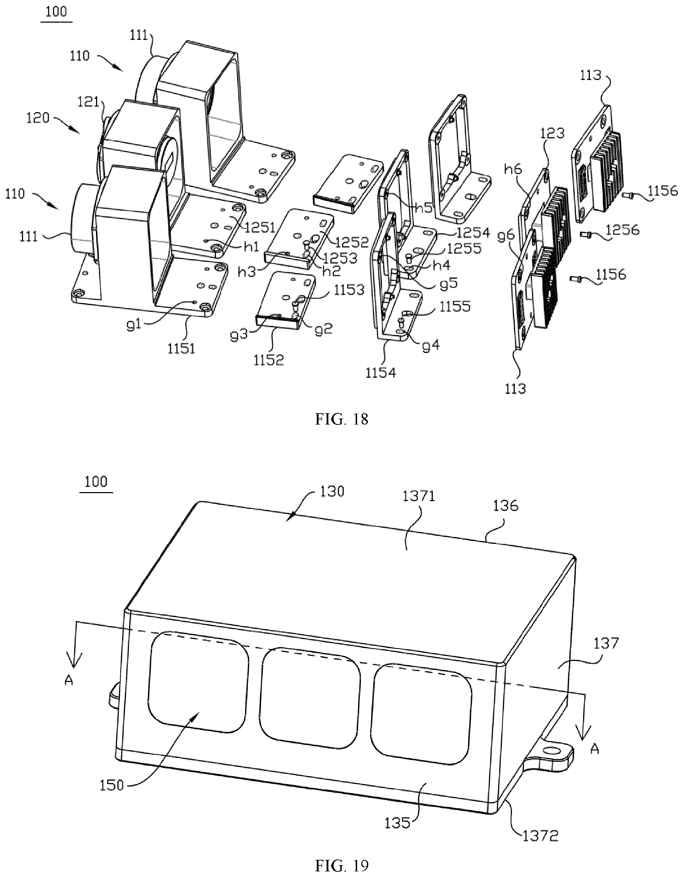

Referring to FIG. 17 and FIG. 18, at least one of the two laser emission modules 110 may further include a first adjustment member 115. The first adjustment member 115 can be connected to the laser emission lens 111 and the emission board 113. The first adjusting member 115 can adjust the relative position of the laser emitting lens 111 and the laser emitting sensors 112 which are on the emitting plate 113, to collimate an emission optical axis, thereby improving the detection accuracy of the LiDAR 100.

In an example solution, the first adjustment member 115 may include a first adjustment plate 1151, a second adjustment plate 1152 and a first locking part 1153. The first adjustment plate1151 may be connected to the laser emission lens 111, and the first adjustment plate 1151 may be provided with a first spacing aperture g1. The second adjustment plate 1152 may be provided with a second spacing aperture g2, the first spacing aperture g1 and/or the second spacing aperture g2 may extend along the first direction, and the first locking part 1153 may penetrate through the first spacing aperture g1 and the second spacing aperture g2 and may be detachably connected to the first adjustment plate 1151 and the second adjustment plate 1152. In this way, when the laser emission module 110 is assembled, the laser emission lens 111 and the emission board 113 can be first positioned in advance via the first adjustment member 115, and then the first locking part 1153 is fine-tuned in the first spacing aperture g1 and/or the second spacing aperture g2 in a first direction, which can implement fine-tuning of the laser emission lens 111 and the laser emission sensors 112 that are on the emission board 113which can implement fine-tuning of the laser emission sensors 112 on the laser emission lens 111 and the emission board 113, thereby improving collimation of the emission optical axis in a simple and easy adjustment method.

In an example solution, the first locking part 1153 may include a screw and a nut. A rod part of the screw may penetrate through the first spacing aperture g1 and the second spacing aperture g2, and the nut may be on a side of the rod part of the screw facing away from an end of the screw and come into contact with a screw thread. In this way, when the screw and the nut are fastened, the end of the screw and the nut can press against two opposite plate surfaces of the first adjustment plate 1151 and the second adjustment plate 1152, to fix the first adjustment plate 1151 and the second adjustment plate 1152. When the relative positions of the laser emission lens 111 and the emission board 113 need to be adjusted in the first direction, contact between the screw and the nut can be loosened first, the second adjustment plate 1152 can be moved in the first direction, and after the second adjustment plate reaches a specific position, the screw and the nut may be fastened, to fix the first adjustment plate 1151 and the second adjustment plate 1152. The screw and the nut cooperate to lock and unlock the first adjustment plate 1151 and the second adjustment plate 1152, which is convenient to adjust while ensuring reliable contact.

It should be noted that the first locking part 1153 may also include a pin. There may be interference fit between an outer surface of the pin and an inner wall surface of the first spacing aperture g1 and an inner wall surface of the second spacing aperture g2, thereby fixing the first adjustment plate 1151 and the second adjustment plate 1152. Certainly, the first locking part 1153 may further include a pin or the like that is fixedly installed in the first spacing aperture g1 or the second spacing aperture g2. This is not limited in this embodiment of this application.

Further, the first adjustment member 115 may also include a third adjustment plate 1154 and a second locking part 1155. The second adjustment plate 1152 may be further provided with a third spacing aperture g3. The third adjustment plate 1154 may be provided with a fourth spacing aperture g4, the third spacing aperture g3 and/or the fourth spacing aperture g4 may extend in a second direction, and the second locking part 1152 may penetrate through the third spacing aperture g3 and the fourth spacing aperture g4 and may be detachably connected to the second adjustment plate 1152 and the third adjustment plate 1154. The second direction may intersect with the first direction, and the third adjustment plate 1154 is connected to the emission board 113, to fine-tune the laser emission lens 111 and the emission board 113 in two directions. Specifically, when the laser emission module 110 is assembled, the laser emission lens 111 and the emission board 113 can be first positioned in advance via the first adjustment member 115, then the first locking part 1153 is moved in the first spacing aperture g1 and/or the second spacing aperture g2 in a first direction, which can implement fine-tuning of the laser emission lens 111 and the emission board 113 in the first direction, and the second locking part 1155 is moved in the third spacing aperture g3 and/or the fourth spacing aperture g4 in the second direction, which can implement fine-tuning of the laser emission lens 111 and the emission board 113 in the second direction, so that the emission optical axis can be collimated in the two directions, thereby improving collimation of the emission optical axis.

Similarly, the second locking part 1155 may include a screw and a nut, or a pin, or a pin or the like fixedly installed in the third spacing aperture g3 or the fourth spacing aperture g4. Details are not described in this embodiment of this application again.

Further, the first adjustment member 115 may further include a third locking part 1156. The third adjustment plate 1154 and the emission board 113 may be connected via the third locking part 1156. Specifically, the third adjustment plate 1154 may be further provided with a fifth spacing aperture g5. The emission board 113 may be provided with a sixth spacing aperture g6, the fifth spacing aperture g5 and/or the sixth spacing aperture g6 may extend in a third direction, and the third locking part 1156 may penetrate through the fifth spacing aperture g5 and the sixth spacing aperture g6 and may be detachably connected to the third adjustment plate 1154 and the emission board 113. Any two of the first direction, the second direction and the third direction may be perpendicular to each other, to fine-tune the laser emission lens 111 and the emission board 113 in the three directions any two of which are perpendicular to each other. Specifically, when the laser emission module 110 is assembled, the laser emission lens 111 and the emission board 113 can be first positioned in advance via the first adjustment member 115, then the first locking part 1153 is moved in the first spacing aperture g1 and/or the second spacing aperture g2 in a first direction, which can implement fine-tuning of the laser emission lens 111 and the emission board 113 in the first direction, the second locking part 1155 is moved in the third spacing aperture g3 and/or the fourth spacing aperture g4 in the second direction, which can implement fine-tuning of the laser emission lens 111 and the emission board 113 in the second direction, and the third locking part 1156 is moved in the fifth spacing aperture g5 and/or the sixth spacing aperture g6 in the third direction, which can implement fine-tuning of the laser emission lens 111 and the emission board 113 in the third direction, so that the emission optical axis can be collimated in the three directions any two of which are perpendicular to each other, thereby adjusting the emission optical axis to an optimal collimation state.

Similarly, the third locking part 1156 may include a screw and a nut, or a pin, or a pin or the like fixedly installed in the fifth spacing aperture g5 or the sixth spacing aperture g6. Details are not described in this embodiment of this application again.

Similarly, the laser receiving module 120 may further include a second adjustment member 125. The second adjustment member 125 can be connected to the laser receiving lens 121 and the receiving board 123. The second adjustment member 125 can adjust the relative positions of the laser receiving lens 121 and the laser receiving sensor 122 which is on the receiving board 123, to collimate a receiving optical axis, thereby improving the detection accuracy of the LiDAR 100.

In an example solution, the second adjustment member 125 may include a fourth adjustment plate 1251, a fifth adjustment plate 1252 and a fourth locking part 1253. The fourth adjustment plate 1251 may be connected to the laser receiving lens 121, and the fourth adjustment plate 1251 may be provided with a first location aperture h1. The fifth adjustment plate 1252 may be provided with a second location aperture h2. The first location aperture h1 and/or the second location aperture h2 may extend along the first direction, and the fourth locking part 1253 may penetrate through the first location aperture h1 and the second location aperture h2 and may be detachably connected to the fourth adjustment plate 1251 and the fifth adjustment plate 1252. In this way, when the laser receiving module 120 is assembled, the laser receiving lens 121 and the receiving board 123 can be first positioned in advance via the second adjustment member 125, and then the fourth locking part 1253 is fine-tuned in the first location aperture h1 and/or the second location aperture h2 in the first direction, which can implement fine-tuning of the laser receiving lens 121 and the laser receiving sensor 122 that is on the receiving board 123, thereby improving collimation of the receiving optical axis in a simple and easy adjustment method.

In an example solution, the fourth locking part 1253 may include a screw and a nut. A rod part of the screw may penetrate through the first location aperture h1 and the second location aperture h2, and the nut may be on a side of the rod part of the screw facing away from an end of the screw and come into contact with a screw thread. In this way, when the screw and the nut are fastened, the end of the screw and the nut can press against two opposite plate surfaces of the fourth adjustment plate 1251 and the fifth adjustment plate 1252, to fix the fourth adjustment plate 1251 and the fifth adjustment plate 1252. When the relative positions of the laser receiving lens 121 and the receiving board 123 need to be adjusted in the first direction, contact between the screw and the nut can be loosened first, the fifth adjustment plate 1252 can be moved in the first direction, and after the fifth adjustment plate1252 reaches a specific position, the screw and the nut may be fastened, to fix the fourth adjustment plate 1251 and the fifth adjustment plate 1252. The screw and the nut cooperate to lock and unlock the fourth adjustment plate 1251 and the fifth adjustment plate 1252, which is convenient to adjust while ensuring reliable contact.

It should be noted that the fourth locking part 1253 may also include a pin, and there may be interference fit between an outer surface of the pin and an inner wall surface of the first location aperture h1 and an inner wall surface of the second location aperture h2, thereby fixing the fourth adjustment plate 1251 and the fifth adjustment plate 1252. Certainly, the fourth locking part 1253 may further include a pin or the like that is fixedly installed in the first location aperture h1 or the second location aperture h2. This is not limited in this embodiment of this application.

Further, the second adjustment member 125 may also include a sixth adjustment plate 1254 and a fifth locking part 1255. The fifth adjustment plate 1252 may be further provided with a third location aperture h3. The sixth adjustment plate 1254 may be provided with a fourth location aperture h4, the third location aperture h3 and/or the fourth location aperture h4 may extend in a second direction, and the fifth locking part 1255 may penetrate through the third location aperture h3 and the fourth location aperture h4 and may be detachably connected to the fifth adjustment plate 1252 and the sixth adjustment plate 1254. The second direction may intersect with the first direction, and the sixth adjustment plate 1254 is connected to the receiving board 123, to fine-tune the laser receiving lens 121 and the receiving board 123 in two directions. Specifically, when the laser receiving module 120 is assembled, the laser receiving lens 121 and the receiving board 123 can be first positioned in advance via the second adjustment member 125, then the fourth locking part 1253 is moved in the first location aperture h1 and/or the second location aperture h2 in a first direction, which can implement fine-tuning of the laser receiving lens 121 and the receiving board 123 in the first direction, and the fifth locking part 1255 is moved in the third location aperture h3 and/or the fourth location aperture h4 in the second direction, which can implement fine-tuning of the laser receiving lens 121 and the receiving board 123 in the second direction, so that the receiving optical axis can be collimated in the two directions, thereby improving collimation of the receiving optical axis.

Similarly, the fifth locking part 1255 may include a screw and a nut, or a pin, or a pin or the like fixedly installed in the third location aperture h3 or the fourth location aperture h4. Details are not described in this embodiment of this application again.

Further, the second adjustment member 125 may further include a sixth locking part 1256. The sixth adjustment plate 1254 and the receiving board 123 may be connected via the sixth locking part 1256. Specifically, the sixth adjustment plate 1254 may be further provided with a fifth location aperture h5. The receiving board 123 may be provided with a sixth location aperture h6, the fifth location aperture h5 and/or the sixth location aperture h6 may extend in a third direction, and the sixth locking part 1256 may penetrate through the fifth location aperture h5 and the sixth location aperture h6 and may be detachably connected to the sixth adjustment plate 1254 and the receiving board 123. Any two of the first direction, the second direction and the third direction may be perpendicular to each other, to fine-tune the laser receiving lens 121 and the receiving board 123 in the three directions any two of which are perpendicular to each other. Specifically, when the laser receiving module 120 is assembled, the laser receiving lens 121 and the receiving board 123 can be first positioned in advance via the second adjustment member 125, then the fourth locking part 1253 is moved in the first location aperture h1 and/or the second location aperture h2 in the first direction, which can implement fine-tuning of the laser receiving lens 121 and the receiving board 123 in the first direction, the fifth locking part 1255 is moved in the third location aperture h3 and/or the fourth location aperture h4 in the second direction, which can implement fine-tuning of the laser receiving lens 121 and the receiving board 123 in the second direction, and the sixth locking part 1256 is moved in the fifth location aperture h5 and/or the sixth location aperture h6 in the third direction, which can implement fine-tuning of the laser receiving lens 121 and the receiving board 123 in the third direction, so that the receiving optical axis can be collimated in the three directions any two of which are perpendicular to each other, thereby adjusting the receiving optical axis to an optimal collimation state.

Similarly, the sixth locking part 1256 may include a screw and a nut, or a pin, or a pin or the like fixedly installed in the fifth location aperture h5 or the sixth location aperture h6. Details are not described in this embodiment of this application again.

It can be understood that, in this application, the first adjustment member 115 and the second adjustment member 125 are disposed, and the adjustment plate, the spacing aperture and the locking member in the adjustment member cooperate, to ensure minimum adjustment while ensuring adjustment efficiency and accuracy.

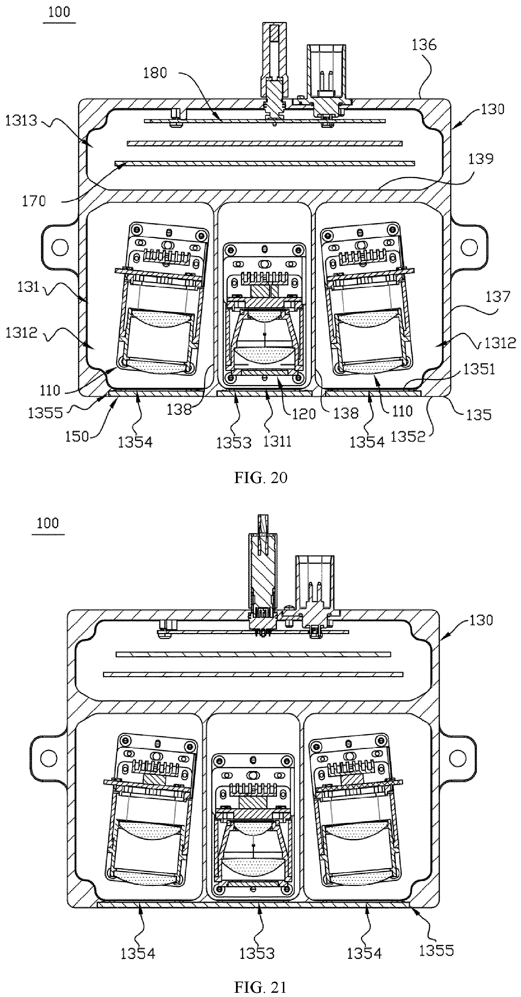

Referring to FIG. 19 and FIG. 20, FIG. 19 and FIG. 20 are a three-dimensional diagram and a cross-sectional view of ninth LiDAR 100 according to an embodiment of this application. A difference between the LiDAR 100 shown in FIG. 20 and the LiDAR 100 shown in FIG. 7 includes: The two laser emission modules 110 and the laser receiving module 120 shown in FIG. 7 are located in the same accommodating cavity 131, while the two laser emission modules 110 and the laser receiving module 120 shown in FIG. 20 are located in different accommodating cavities 131. Specifically, the housing 130 may include a first plate body 135, a second plate body 136, a peripheral side plate 137 and two first baffles 138. The second plate body 136 and the first plate body 135 may be provided at intervals, the peripheral side plate 137 may be located at a periphery of the first plate body 135 and connect the first plate body 135 to the second plate body 136, and an accommodation cavity 131 is formed between the peripheral side plate 137, the first plate body 135 and the second plate body 136. The peripheral side plate 137 may include a plurality of side plates. If two opposite side plates are defined as a first side plate 1371 and a second side plate 1372 respectively, the two first baffles 138 may be distributed at intervals in the accommodating cavity 131 and both are connected between the first side plate 1371 and the second side plate 1372. A first accommodating cavity 1311 may be formed between the two first baffles 138, a second accommodating cavity 1312 may be formed between each first baffle 138 and the peripheral side plate 137, at least part of the laser receiving module 120 is located in the first accommodating cavity 1311, and at least part of each laser emission module 110 is located in one second accommodating cavity 1312 respectively. In this way, no optical crosstalk is generated between the laser emission module 110 and the laser receiving module 120, which helps improve the detection accuracy of the LiDAR 100.

Further, the housing 130 may further include a second baffle 139. The second baffle 139 may be located in the accommodating cavity 131 and connected between the first side plate 1371 and the second side plate 1372, and the two first baffles 138 may be on a side close to the first plate body 135, and the second baffle 139 may be on a side close to the second plate body 136. A third accommodating cavity 1313 can be formed between the second baffle 139 and the peripheral side plate 137, and a main control board 170, an interface board 180 and the like of the LiDAR 100 can be located in the third accommodating cavity 1313, so that structures such as the laser emission modules 110, the laser receiving module 120, the main control board 170, and the interface board 180 are mounted independently of each other, thereby ensuring that wiring is more convenient to perform. The second baffle 139 may be provided with a mounting aperture through which a wire is provided.

Same as the solution shown in FIG. 7, referring to FIG. 20, both the laser receiving module 120 and the two laser emission modules 110 may be completely located in the accommodating cavity 131. In this case, the first plate body 135 may have a first plate surface 1351 facing the accommodating cavity 131 and a second plate surface 1352 opposite the first plate surface 1351, and the first plate body 135 may be provided with a first light-passing aperture 1353 penetrating the first plate surface 1351 and the second plate surface 1352, and second light-passing apertures 1354 on two sides of the first light-passing aperture 1353 respectively. The laser receiving module 120 can be disposed corresponding to the first light-passing aperture 1353, so that the received light can pass through the first light-passing aperture 1353 to reach the laser receiving module 120. Each laser emission module 110 may be disposed corresponding to one second light-passing aperture 1354, so that emitted light can pass through the second light-passing aperture 1354 to reach a to-be-photographed object.

It should be noted that, in FIG. 20, the laser receiving module 120 and the two laser emission modules 110 are completely located in the accommodating cavity 131. Specifically, the laser receiving module 120 is completely located in the first accommodating cavity 1311, and each laser emission module 110 is completely located in one second accommodating cavity 1312 respectively.

Similarly, in FIG. 20, the second plate surface 1352 may be provided with a light-passing protective plate 150 covering the first light-passing aperture 1353 and the two second light-passing apertures 1354. The second plate surface 1352 may be provided with a mounting groove 1355, the mounting groove 1355 may be connected to the first light-passing aperture 1353 and the two second light-passing apertures 1354, and the light-passing protective plate 150 is located in the mounting groove 1355. Therefore, the light-passing protective plate 150 does not protrude from the housing 130, thereby rendering the LiDAR 100 more artistic.

In an example solution, the second plate surface 1352 may be provided with a first mounting groove and second mounting grooves respectively located on two sides of the first mounting groove, the first mounting groove may be connected to the first light-passing aperture 1353, each second mounting groove may be respectively connected to one second light-passing aperture 1354, the light-passing protective plate 150 includes a first light-passing protective subplate and two second light-passing protective subplates. The first light-passing protective subplate may be located in the first mounting groove, and each second light-passing protective subplate may be respectively located in one second mounting groove. In another example solution, referring to FIG. 21, the mounting groove 1355 may be integral and connected to the first light-passing aperture 1353 and the two light-passing apertures 1354.

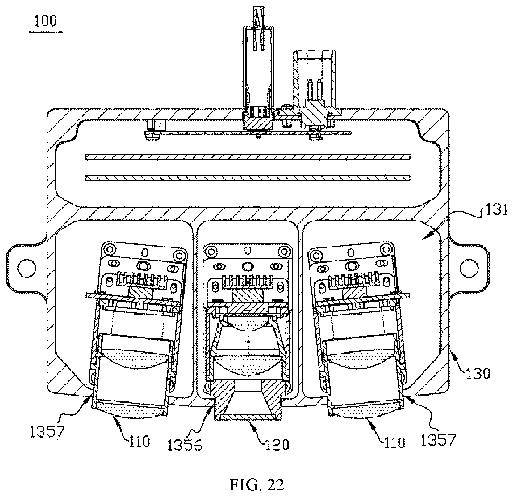

Referring to FIG. 22, parts of the two laser emission modules 110 and the laser receiving module 120 can also be disposed in the accommodating cavity 131, and other parts are disposed outside the housing 130. In this case, the first plate body 135 is provided with a first mounting aperture 1356 and second mounting apertures 1357 on two sides of the first mounting aperture 1356 respectively. A receiving end of the laser receiving module 120 penetrates through the first mounting aperture 1356 and is outside the housing 130; and an emission end of each laser emission module 110 penetrates through one second mounting aperture 1357 and is outside the housing 130 respectively.

## Claims

1. A LiDAR device (100), comprising:
two laser emission modules (110); and
one laser receiving module (120),
wherein the two laser emission modules (110) are separately arranged on opposite sides of the laser receiving module (120), and a combination of emission fields of view of the two laser emission modules (110) matches a receiving field of view of the laser receiving module (120),
**characterized in that** each laser emission module (110) comprises:
a laser emission lens (111), wherein the laser emission lens (111) has a first optical axis; and
a laser emission sensor (112), wherein the laser emission sensor (112) is located on a light-incident side of the laser emission lens (110) and configured to emit a laser beam to the laser emission lens (110), the laser emission sensor (112) is located on a side of the first optical axis that is close to the laser receiving module (120), and the emission fields of view of the two laser emission modules (110) overlap.

2. The LiDAR device (100) according to claim 1, further comprising:
a housing (130), wherein an accommodating cavity (131) is formed in the housing (130); and
a bracket (140), wherein the bracket (140) is located in the accommodating cavity (131), the bracket (140) is provided with a first mounting aperture (141) and second mounting apertures (142) separately located on both sides of the first mounting aperture (141), the laser receiving module (120) is mounted in the first mounting aperture (141), and each laser emission module (110) is respectively mounted in one second mounting aperture (142).

3. The LiDAR device according to claim 2, wherein the two laser emission modules and the laser receiving module are all located in the accommodating cavity, and the housing comprises:
a first plate body (132), wherein the first plate body has a first plate surface (1321) facing the accommodating cavity and a second plate surface (1322) opposite the first plate surface, the first plate body is provided with a first light-passing aperture (1323) penetrating the first plate surface and the second plate surface, and second light-passing apertures (1324) respectively located on two sides of the first light-passing aperture, the laser receiving module is disposed corresponding to the first light-passing aperture, each laser emission module is disposed corresponding to one second light-passing aperture, and the second plate surface is provided with a light-passing protective plate (150) covering the first light-passing aperture and the two second light-passing apertures.

4. The LiDAR device according to claim 3, wherein:
a mounting groove (1325) is provided in the second plate surface, the mounting groove is connected to the first light-passing aperture and the two second light-passing apertures, and the light-passing protective plate is located in the mounting groove; or
the second plate surface is provided with a first mounting groove (1326) and second mounting grooves (1327) respectively located on two sides of the first mounting groove, the first mounting groove is connected to the first light-passing aperture, each second mounting groove is respectively connected to one second light-passing aperture, the light-passing protective plate comprises a first light-passing protective subplate and two second light-passing protective subplates, the first light-passing protective subplate is located in the first mounting groove, and each second light-passing protective subplate is respectively located in one second mounting groove.

5. The LiDAR device according to claim 2, wherein the housing comprises:
a first plate body (132), wherein the first plate body has a first plate surface facing the accommodating cavity and a second plate surface opposite the first plate surface, the first plate body is provided with a third mounting aperture (1328) penetrating the first plate surface and the second plate surface, and fourth mounting apertures (1329) respectively located on two sides of the third mounting aperture, a receiving end (124) of the laser receiving module penetrates through the third mounting aperture and projects to the outside of the housing, and an emission end (114) of each laser emission module respectively penetrates through one fourth mounting aperture and projects to the outside of the housing.

6. The LiDAR device according to any one of claims 1 to 5, wherein:
the first optical axes of the two laser emission modules are parallel to a second optical axis of the laser receiving module; and/or
a light shielding member (160) is sleeved at a periphery of at least one of emission ends of the two laser emission modules and the receiving end of the laser receiving module.

## Patentansprüche

1. LiDAR-Vorrichtung (100), umfassend:
zwei Laseremissionsmodule (110); und
ein Laserempfangsmodul (120),
wobei die zwei Laseremissionsmodule (110) separat auf gegenüberliegenden Seiten des Laserempfangsmoduls (120) angeordnet sind und eine Kombination von Emissions-Sichtfeldern der zwei Laseremissionsmodule (110) mit einem Empfangs-Sichtfeld des Laserempfangsmoduls (120) übereinstimmt,
**dadurch gekennzeichnet, dass** jedes Laseremissionsmodul (110) umfasst:
eine Laseremissionslinse (111), wobei die Laseremissionslinse (111) eine erste optische Achse aufweist; und
einen Laseremissionssensor (112), wobei sich der Laseremissionssensor (112) auf einer lichteinfallenden Seite der Laseremissionslinse (110) befindet und dazu ausgebildet ist, einen Laserstrahl auf die Laseremissionslinse (110) zu emittieren, sich der Laseremissionssensor (112) auf einer Seite der ersten optischen Achse befindet, die nahe dem Laserempfangsmodul (120) liegt, und sich die Emissions-Sichtfelder der zwei Laseremissionsmodule (110) überlappen.

2. LiDAR-Vorrichtung (100) nach Anspruch 1, ferner umfassend:
ein Gehäuse (130), wobei in dem Gehäuse (130) eine Aufnahmekavität (131) ausgebildet ist; und
eine Halterung (140), wobei sich die Halterung (140) in der Aufnahmekavität (131) befindet, die Halterung (140) mit einer ersten Montageöffnung (141) und zweiten Montageöffnungen (142) versehen ist, die sich separat auf beiden Seiten der ersten Montageöffnung (141) befinden, das Laserempfangsmodul (120) in der ersten Montageöffnung (141) montiert ist und jedes Laseremissionsmodul (110) jeweils in einer zweiten Montageöffnung (142) montiert ist.

3. LiDAR-Vorrichtung nach Anspruch 2, wobei die zwei Laseremissionsmodule und das Laserempfangsmodul sich alle in der Aufnahmekavität befinden, und das Gehäuse umfasst:
einen ersten Plattenkörper (132), wobei der erste Plattenkörper eine erste Plattenoberfläche (1321), die der Aufnahmekavität zugewandt ist, und eine zweite Plattenoberfläche (1322), die der ersten Plattenoberfläche gegenüberliegt, aufweist, der erste Plattenkörper mit einer ersten Lichtdurchtrittsöffnung (1323), die die erste Plattenoberfläche und die zweite Plattenoberfläche durchdringt, sowie mit zweiten Lichtdurchtrittsöffnungen (1324) versehen ist, die sich jeweils auf zwei Seiten der ersten Lichtdurchtrittsöffnung befinden, das Laserempfangsmodul entsprechend der ersten Lichtdurchtrittsöffnung angeordnet ist, jedes Laseremissionsmodul entsprechend einer zweiten Lichtdurchtrittsöffnung angeordnet ist und die zweite Plattenoberfläche mit einer Lichtdurchtritts-Schutzplatte (150) versehen ist, die die erste Lichtdurchtrittsöffnung und die zwei zweiten Lichtdurchtrittsöffnungen abdeckt.

4. LiDAR-Vorrichtung nach Anspruch 3, wobei:
in der zweiten Plattenoberfläche eine Montagenut (1325) vorgesehen ist, die Montagenut mit der ersten Lichtdurchtrittsöffnung und den zwei zweiten Lichtdurchtrittsöffnungen verbunden ist und sich die Lichtdurchtritts-Schutzplatte in der Montagenut befindet; oder
die zweite Plattenoberfläche mit einer ersten Montagenut (1326) und zweiten Montagenuten (1327) versehen ist, die sich jeweils auf zwei Seiten der ersten Montagenut befinden, die erste Montagenut mit der ersten Lichtdurchtrittsöffnung verbunden ist, jede zweite Montagenut jeweils mit einer zweiten Lichtdurchtrittsöffnung verbunden ist, die Lichtdurchtritts-Schutzplatte eine erste Lichtdurchtritts-Schutzteilplatte und zwei zweite Lichtdurchtritts-Schutzteilplatten umfasst, sich die erste Lichtdurchtritts-Schutzteilplatte in der ersten Montagenut befindet und sich jede zweite Lichtdurchtritts-Schutzteilplatte jeweils in einer zweiten Montagenut befindet.

5. LiDAR-Vorrichtung nach Anspruch 2, wobei das Gehäuse umfasst:
einen ersten Plattenkörper (132), wobei der erste Plattenkörper eine erste Plattenoberfläche, die der Aufnahmekavität zugewandt ist, und eine zweite Plattenoberfläche, die der ersten Plattenoberfläche gegenüberliegt, aufweist, der erste Plattenkörper mit einer dritten Montageöffnung (1328), die die erste Plattenoberfläche und die zweite Plattenoberfläche durchdringt, sowie mit vierten Montageöffnungen (1329) versehen ist, die sich jeweils auf zwei Seiten der dritten Montageöffnung befinden, ein Empfangsende (124) des Laserempfangsmoduls durch die dritte Montageöffnung hindurchtritt und nach außerhalb des Gehäuses vorsteht und ein Emissionsende (114) jedes Laseremissionsmoduls jeweils durch eine vierte Montageöffnung hindurchtritt und nach außerhalb des Gehäuses vorsteht.

6. LiDAR-Vorrichtung nach einem der Ansprüche 1 bis 5, wobei:
die ersten optischen Achsen der zwei Laseremissionsmodule parallel zu einer zweiten optischen Achse des Laserempfangsmoduls sind; und/oder
ein Lichtabschirmelement (160) an einer Peripherie von mindestens einem von Emissionsenden der zwei Laseremissionsmodule und dem Empfangsende des Laserempfangsmoduls hülsenförmig angeordnet ist.

## Revendications

1. Dispositif LiDAR (100), comprenant :
deux modules d'émission laser (110) ; et
un module de réception laser (120),
dans lequel les deux modules d'émission laser (110) sont disposés séparément sur des côtés opposés du module de réception laser (120), et une combinaison de champs de vision d'émission des deux modules d'émission laser (110) correspond à un champ de vision de réception du module de réception laser (120),
**caractérisé en ce que** chaque module d'émission laser (110) comprend :
une lentille d'émission laser (111), dans laquelle la lentille d'émission laser (111) présente un premier axe optique ; et
un capteur d'émission laser (112), dans lequel le capteur d'émission laser (112) est situé sur un côté d'incidence lumineuse de la lentille d'émission laser (110) et configuré pour émettre un faisceau laser vers la lentille d'émission laser (110), le capteur d'émission laser (112) est situé sur un côté du premier axe optique qui est proche du module de réception laser (120), et les champs de vision d'émission des deux modules d'émission laser (110) se chevauchent.

2. Dispositif LiDAR (100) selon la revendication 1, comprenant en outre :
un boîtier (130), dans lequel une cavité d'accueil (131) est formée dans le boîtier (130) ; et
un support (140), dans lequel le support (140) est situé dans la cavité d'accueil (131), le support (140) est pourvu d'une première ouverture de montage (141) et de deuxièmes ouvertures de montage (142) situées séparément des deux côtés de la première ouverture de montage (141), le module de réception laser (120) est monté dans la première ouverture de montage (141) et chaque module d'émission laser (110) est respectivement monté dans une deuxième ouverture de montage (142).

3. Dispositif LiDAR selon la revendication 2, dans lequel les deux modules d'émission laser et le module de réception laser sont tous situés dans la cavité d'accueil, et le boîtier comprend :
un premier corps de plaque (132), dans lequel le premier corps de plaque présente une première surface de plaque (1321) tournée vers la cavité d'accueil et une deuxième surface de plaque (1322) opposée à la première surface de plaque, le premier corps de plaque est pourvu d'une première ouverture de passage de lumière (1323) traversant la première surface de plaque et la deuxième surface de plaque, et de deuxièmes ouvertures de passage de lumière (1324) situées respectivement des deux côtés de la première ouverture de passage de lumière, le module de réception laser est disposé en regard de la première ouverture de passage de lumière, chaque module d'émission laser est disposé en regard d'une deuxième ouverture de passage de lumière, et la deuxième surface de plaque est pourvue d'une plaque de protection à passage de lumière (150) recouvrant la première ouverture de passage de lumière et les deux deuxièmes ouvertures de passage de lumière.

4. Dispositif LiDAR selon la revendication 3, dans lequel :
une rainure de montage (1325) est prévue dans la deuxième surface de plaque, la rainure de montage est reliée à la première ouverture de passage de lumière et aux deux deuxièmes ouvertures de passage de lumière, et la plaque de protection à passage de lumière est située dans la rainure de montage ; ou
la deuxième surface de plaque est pourvue d'une première rainure de montage (1326) et de deuxièmes rainures de montage (1327) situées respectivement des deux côtés de la première rainure de montage, la première rainure de montage est reliée à la première ouverture de passage de lumière, chaque deuxième rainure de montage est respectivement reliée à une deuxième ouverture de passage de lumière, la plaque de protection à passage de lumière comprend une première sous-plaque de protection à passage de lumière et deux deuxièmes sous-plaques de protection à passage de lumière, la première sous-plaque de protection à passage de lumière est située dans la première rainure de montage, et chaque deuxième sous-plaque de protection à passage de lumière est située respectivement dans une deuxième rainure de montage.

5. Dispositif LiDAR selon la revendication 2, dans lequel le boîtier comprend :
un premier corps de plaque (132), dans lequel le premier corps de plaque présente une première surface de plaque tournée vers la cavité d'accueil et une deuxième surface de plaque opposée à la première surface de plaque, le premier corps de plaque est pourvu d'une troisième ouverture de montage (1328) traversant la première surface de plaque et la deuxième surface de plaque, et de quatrièmes ouvertures de montage (1329) situées respectivement des deux côtés de la troisième ouverture de montage, une extrémité de réception (124) du module de réception laser traverse la troisième ouverture de montage et fait saillie vers l'extérieur du boîtier, et une extrémité d'émission (114) de chaque module d'émission laser traverse respectivement une quatrième ouverture de montage et fait saillie vers l'extérieur du boîtier.

6. Dispositif LiDAR selon l'une quelconque des revendications 1 à 5, dans lequel :
les premiers axes optiques des deux modules d'émission laser sont parallèles à un deuxième axe optique du module de réception laser ; et/ou
un élément de blindage lumineux (160) est disposé en manchon à une périphérie d'au moins une extrémité parmi des extrémités d'émission des deux modules d'émission laser et l'extrémité de réception du module de réception laser.
